# EUROPEAN PATENT APPLICATION

(11) **EP 2 682 894 A2**
(43) Date of publication of application: **08.01.2014**
(21) Application number: 13187166.7
(22) Date of filing: 12.03.2012
(51) Int. Cl.: G06K 7/12, G06K 19/06

(54) **Film on which a code is recorded, reader used for recognizing the film on which a code is recorded, and electronic equipment including a display device to which the film on which a code is recorded is attached**

(30) Priority: 25.04.2011 KR 20110038300
(62) Divisional of application: 12775941.3
(71) Applicant: Intellectual Discovery Co., Ltd., Seoul 135-745 (KR)
(72) Inventor: Lee, Sang-Gyu, 137-070 Seoul (KR); Lee, Suk-Joo, 448-160 Gyeonggi-do (KR); Park, Bong-Ki, 446-740 Gyeonggi-do (KR)
(74) Representative: Ter Meer Steinmeister & Partner

(57) **Abstract**

Disclosed are a film (200) having codes recorded thereon, a reader (100) used to recognize the film having the codes recorded thereon, and electronic equipment including a display device to which the film having the codes recorded thereon is attached. The reader includes a light emitting part (110-1) irradiating light having a first wavelength onto a film surface printed with a code by using a predetermined fluorescent material, and a light receiving part receiving only a light having a second wavelength radiated by the predetermined fluorescent material if the light having the first wavelength is irradiated on the code. The reader recognizes the codes together with a screen when a code pattern is printed on the surface of the transparent material and the transparent material is attached on the surface of a display part provided in the electronic equipment.

## Description

### [Technical Field]

The present invention relates to a film having codes recorded thereon, a reader used to recognize the film having the codes recorded thereon, and electronic equipment including a display device to which the film having the codes recorded thereon is attached. In more detail, the present invention relates to a film having codes recorded thereon, which can provide a code pattern readable by a reader even if the codes are marked on the surface of a transparent material so that the film can be attached onto the surface of a display part provided in electronic equipment for the use thereof, the reader used to recognize the film having the codes recorded thereon, and the electronic equipment including a display device to which the film having the codes recorded thereon is attached.

### [Background Art]

When a reader according to the related art recognizes codes formed on a target surface to be read, since light irradiated from a light emitting part has the wavelength the same as that of light received in a light receiving part, the beam irradiated from the light emitting part may be directly received in the light receiving part in relation to the target surface except for a diffuse-refractive surface such as a paper surface. Accordingly, the light emitting part must be optically separated from the light receiving part.

In addition, according to the reader of the related art, light spot is created at a transparent film surface recorded with the code so that only light subject to the direct specular reflection from among light irradiated from the light emitting part is incident into the transparent film, and a mirror phenomenon occurs in the film surface except for the portion of the specular reflection so that an image is photographed as if the light of the light emitting part does not reach the film surface. For this reason, the reader according to the related art may not read codes.

Further, since the light spot in the mirror phenomenon is affected by the angle between the reader and the target surface to be read, the light spot may not be determined in the image photographed by a sensor, so that the reading of the codes may be more difficult.

In other words, the reader according to the related art may recognize a code pattern when the code pattern is printed on the surface of an opaque material such as paper. However, when the code pattern is printed on the surface of a transparent material and the transparent material printed with the code pattern is attached to the surface of a display part of electronic equipment such that the code can be recognized in cooperation with images, the reader according to the related art may not be used.

### [Disclosure]

### [Technical Problem]

The present invention has been made to solve the problems occurring in the related art, and an object of the present invention is to provide a film having codes recorded thereon, which can provide a code pattern readable by a reader even if the codes are marked on the surface of a transparent material so that the film can be attached onto the surface of a display part provided in electronic equipment for the use, the reader used to recognize the film having the codes recorded thereon, and the electronic equipment including a display device to which the film having the codes recorded thereon is attached.

### [Technical Solution]

In order to accomplish the above object of the present invention, there is provided a reader including a light emitting part irradiating light having a first wavelength onto a film surface printed with a code by using a predetermined fluorescent material, and a light receiving part receiving only a light having a second wavelength radiated by the predetermined fluorescent material if the light having the first wavelength is irradiated on the code.

Preferably, the light having the first wavelength is an ultraviolet light, and the light having the second wavelength is an infrared light.

Meanwhile, there is provided a film having a code recorded thereon. The film includes a film layer and an information layer formed on the film layer and having the code marked by using a predetermined fluorescent material. The predetermined fluorescent material radiates a light having a second wavelength, which is receivable by a light receiving part of a reader, if a light having a first wavelength is irradiated from a light emitting part of the reader.

Preferably, the light having the first wavelength is an ultraviolet light, and the light having the second wavelength is an infrared light.

In addition, the second wavelength is out of a visible wavelength band.

In addition, the predetermined fluorescent material is a fluorescent material representing a high transmittance with respect to a wavelength out of a visible wavelength band.

In addition, the film further includes a protective layer formed on the information layer to protect the code marked by using the predetermined fluorescent material.

Meanwhile, there is provided an electronic apparatus including a display device having a surface onto which a film having a code recorded thereon is attached. The film includes a transparent film layer, and an information layer formed on the transparent film layer and printed with a code by using a predetermined fluorescent material, and the predetermined fluorescent material radiates a light having a second wavelength, which is receivable by a light receiving part of a reader, if a light having a first wavelength is irradiated from a light emitting part of the reader.

Preferably, the second wavelength is out of a visible wavelength band.

In addition, the predetermined fluorescent material is a fluorescent material representing a high transmittance with respect to a wavelength out of a visible wavelength band.

Meanwhile, there is provided a reader including a first light emitting part (110-1) irradiating a light having a first wavelength, a second light emitting part (110-2) irradiating a light having a second wavelength, a controller (170) controlling one of the first and second light emitting parts (110-1) and (110-2) to irradiate a light, and a light receiving part (150) receiving a light from a product having a code marked thereon, the code receiving the light irradiated thereto from one of the first and second light emitting parts (110-1) and (110-2).

Preferably, the controller (170) controls the second light emitting part (110-1) to irradiate the light having the second wavelength, and determines if a brightness of an image obtained from the product having the code marked thereon through the light receiving part 150 is equal to or greater than a predetermined brightness, if an operation of the reader (100) is started.

In addition, the controller (170) analyzes the code based on a dot representing a lower brightness if the brightness of the image is equal to or greater than the predetermined brightness.

In addition, the controller (170) stops an operation of the second light emitting part (110-2) and controls the first light emitting part (110-1) to irradiate the light having the first wavelength, if the brightness of the image is less than the predetermined brightness.

In addition, the controller (170) analyzes the code based on a dot representing a higher brightness in the image acquired from the product having the code marked thereon through the light receiving part (150).

Further, the light having the first wavelength is an ultraviolet light, and the light having the second wavelength is an infrared light.

Meanwhile, there is provided a film having a code recorded thereon. The film includes a reflective layer (510) including a material reflecting a light irradiated onto the film from a light emitting part (110) of a reader (100), and an information layer (530) formed on the reflective layer (510) and including a material absorbing the irradiated light, wherein the code is marked on the information layer (530) through a hole.

Preferably, the light irradiated into the hole from the light emitting part (110) of the reader (100) is reflected by the reflective layer (510) and received by a light receiving part (150) of the reader (100).

In addition, the film further includes a protective layer (550) formed on the information layer (530) to protect the hole.

In addition, the light irradiated into the hole is refracted and diffuse-reflected in the hole.

Meanwhile, there is provided an electronic apparatus including a display device having a surface to which a film having a code recorded thereon is attached. The film includes a reflective layer (510) including a material reflecting a light irradiated from a light emitting part (110) of a reader (100), and an information layer (530) including a material absorbing the irradiated light. The code is marked on the information layer (530) by using a hole.

Preferably, the light irradiated from the light emitting part (110) of the reader (100) has a wavelength out of a visible wavelength band.

Meanwhile, there is provided a reader including a light emitting part (110) including a reflective layer (510) including a material reflecting an irradiated light and an information layer (530) which is formed on the reflective layer (510), includes a material absorbing the irradiated light, and has a code marked through a hole, and a light receiving part (150) receiving a light obtained by reflecting a light irradiated into the hole of the film from the light emitting part (110).

Preferably, the light irradiated into the hole is refracted and diffuse-reflected from the hole.

### [Advantageous Effects]

As described above, the present invention can provide the film having codes recorded thereon, which can provide a code pattern readable by a reader even if the codes are marked on the surface of a transparent material so that the film can be attached onto the surface of a display part provided in electronic equipment for the use, can be provided.

In addition, the present invention can provide the reader which can recognize the codes together with the screen when the code pattern is printed on the surface of the transparent material and the transparent material is attached on the surface of the display part provided in the electronic device.

Further, according to the present invention, the beam irradiated from the light emitting part may not be directly received in the light receiving part in relation to the target surface except for a diffuse-refractive surface such as a paper surface. Accordingly, the light emitting part need not be optically separated from the light receiving part.

### [Description of Drawings]

FIG. 1 is a view to explain the reading principle of a reader according to one embodiment of the present invention.
FIG. 2 is a view showing an image acquired through a light receiving part of a reader of FIG. 1.
FIG. 3 is a view showing the structure of a film having codes recorded thereon shown in FIG. 1.
FIG. 4 is a view showing the structure of a reader according to another embodiment of the present invention.
FIG. 5 is a view showing an image for a printed surface of FIG. 4.
FIG. 6 is a block diagram showing the functions of the reader of FIG. 4 according to another embodiment of the present invention.
FIG. 7 is a flowchart to explain the operating principle of the reader of FIG. 4 according to another embodiment.
FIG. 8 is a view showing the structure of a film having codes recorded thereon according to still another embodiment of the present invention.
FIG. 9 is a view showing an image for a punched film of FIG. 8.

### [Best Mode]

### [Mode for Invention]

Hereinafter, the present invention will be described in more detail with reference to accompanying drawings. The same components in the drawings will be assigned with the same reference numerals. In addition, the details of structures and functions generally known to those skilled in the art, which will make the subject matter of the present invention unclear, will be omitted in order to avoid redundancy.

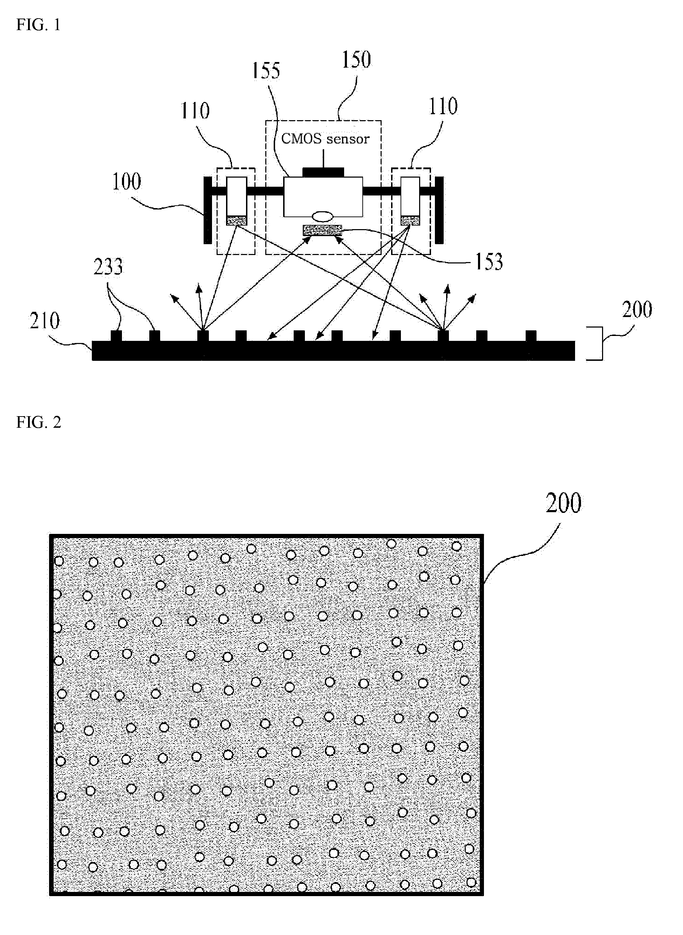

FIG. 1 is a view to explain the reading principle of a reader according to one embodiment of the present invention. Referring to FIG. 1, a reader 100 according to one embodiment of the present invention includes a light emitting part 110 and a light receiving part 150, and reads information of codes out of the surface of a film 200 having the codes recorded thereon.

In the film 200 having the codes recorded thereon, a predetermined fluorescent material is marked on an upper portion of a film layer 210 including a transparent material, and radiates light having a second wavelength, which is receivable by the light receiving part 150 of the reader 100, if light having a first wavelength is irradiated from the light emitting part 110 of the reader 100.

Meanwhile, according to the embodiment of the present invention, the light having the first wavelength may be ultraviolet light, and the light having the second wavelength may be infrared light. In detail, if the light emitting part 110 irradiates the ultraviolet light, which is the light having the first wavelength, onto the film 200 having codes recorded thereon, the fluorescent material, which is marked on a predetermined position of the related film and represents the code information, radiates the infrared light which is the light having the second wavelength.

In other words, according to the present invention, the fluorescent material includes fluorochrome to radiate the infrared light by making fluorescent reaction to the ultraviolet light. The fluorochrome may include sodium chloride compound or hydrated calcium sulfate compound.

Meanwhile, the light receiving part 150 of the reader 100 may receive only the infrared light which is light having the second wavelength. To this end, as shown in FIG. 1, the light receiving part 150 may preferably have a structure in which an IR cut-off filter, serving as a band pass filter 153 allowing only the second wavelength band to pass therethrough, is installed at the front of an image sensor 155.

In other words, since only the light having the second wavelength radiated from the fluorescent material may pass through the band pass filter 153 of the light receiving part 150, an image shown in FIG. 2 may be acquired through the image sensor 155.

In other words, when detecting images produced from the infrared light radiated after the reaction between the ultraviolet light and a fluorescent material 233, parts with the fluorescent material 233 are represented as bright images, and parts without the fluorescent material 233 are represented as dark images. Accordingly, as shown in FIG. 2, the pattern information of dot codes, bar codes, or segment codes marked by the fluorescent material 233 may be acquired.

The pattern information of the dot codes marked by the fluorescent material 233 can be acquired when the parts, which are not marked by the fluorescent material 233, are expressed as dark images. Therefore, according to the embodiment of the present invention, the film layer 210 of FIG. 1 preferably includes a material absorbing the infrared light without reacting to the infrared light.

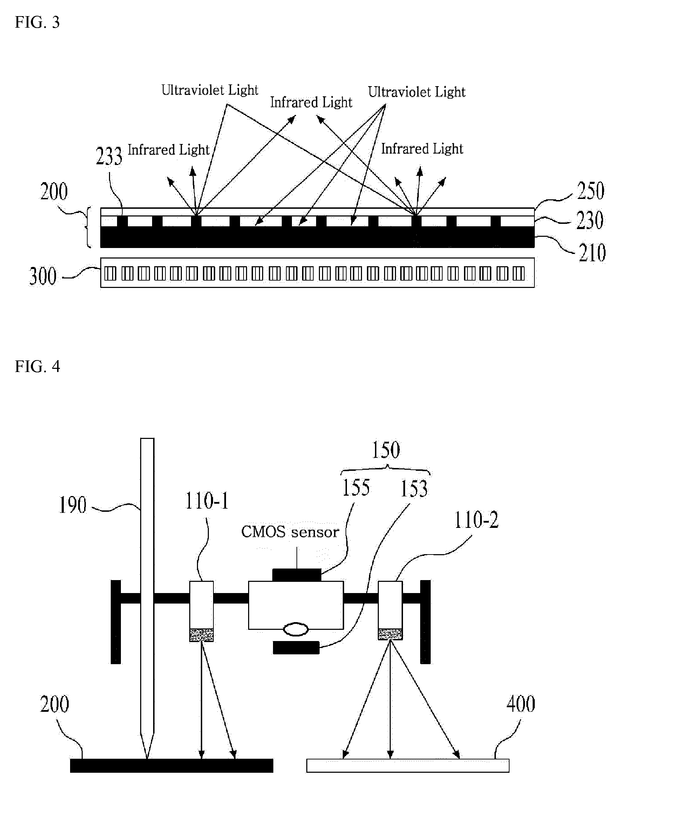

Meanwhile, FIG. 3 is a view showing the structure of the film 200 having the codes recorded thereon shown in FIG. 1. Referring to FIG. 3, the film 200 having the codes recorded thereon includes a film layer 210, an information layer 230, and a protective layer 250.

First, the information layer 230 is provided with the code information on the film layer 210. In detail, the codes are marked by a predetermined fluorescent material to radiate the light having the second wavelength, which is receivable by the light receiving part 150 of the reader 100, when the light having the first wavelength is irradiated from the light emitting part 110 of the reader 100.

Meanwhile, the fluorescent material constituting the above information layer 230 is protected by the protective layer 250 including a transparent material and formed on the information layer 230. According to the embodiment of the present invention, the protective layer 250 preferably includes a PET material.

In addition, the film layer 210 includes a material to absorb the light having the second wavelength received by the light receiving part 150. In addition, the film layer 210 preferably includes a PET film made of a transparent material so that the film 200 having the codes recorded thereon according to the present invention is attached onto the surface of a display device 300 for the use.

The wavelength of the light received in the light receiving part 150 is preferably a wavelength out of the visible wavelength band in order to prevent the reader 100 from erroneously operating by light irradiated from the display device 300 when the film 200 having the codes recorded thereon according to the present invention is attached onto the surface of the display device 300 for the use.

In order to provide a screen image without the distortion thereof to a user viewing the screen image of the display device 300, the fluorescent material constituting the information layer 230 preferably includes fluorochrome representing the higher transmittance in the visible wavelength band, and the density of the fluorescent material may be reduced by reducing the size of dots constituting the code pattern including the fluorescent material.

FIG. 4 is a view showing the structure of the reader 100 according to another embodiment of the present invention. The light emitting part 110 shown in FIG. 4 includes a first light emitting part 110-1 to irradiate the light having the first wavelength and a second light emitting part 110-2 to irradiate the light having the second wavelength so that the light emitting part 110 can selectively irradiate the lights having the two wavelengths.

According to the embodiment of the present invention, preferably, the light having the first wavelength is ultraviolet light, and the light having the second wavelength is infrared light. As shown in FIG. 4, the first light emitting part 110-1, which irradiates ultraviolet light, irradiates the ultraviolet light onto the film 200 having the codes of FIG. 1, so that the reader 100 can read the codes from the film 200. The second light emitting part 110-2, which irradiates the infrared light, allows the reader 100 to read the codes from a typical printed surface 400, such as paper, having dot codes marked thereon by using pigments absorbing infrared light.

Since the principle of reading the codes through the first light emitting part 110-1 is the same as the principle of reading the codes described with reference to FIGS. 1 and 2, only the principle of reading the codes through the second light emitting part 110-2 will be described below.

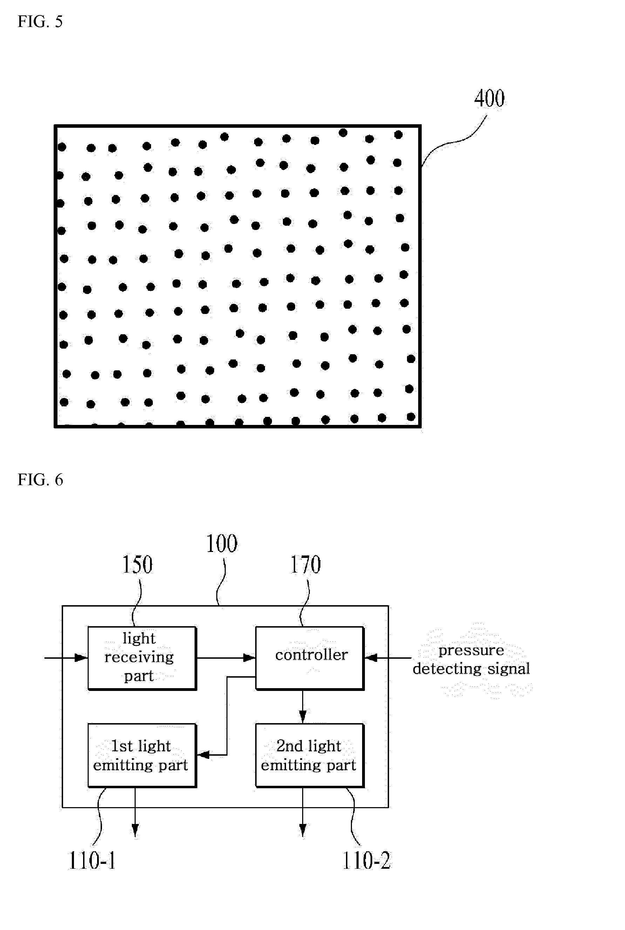

If the second light emitting part 110-2 irradiates the infrared light on the printed surface 400 having the dot codes marked by using the pigments absorbing the infrared light, the infrared light is absorbed in a portion of the printed surface 400 having the dot codes, and reflected from a remaining portion of the printed surface 400. Accordingly, an image obtained through the light receiving part 150, which receives only the infrared light, has dark portions corresponding to the dot codes as shown in FIG. 5.

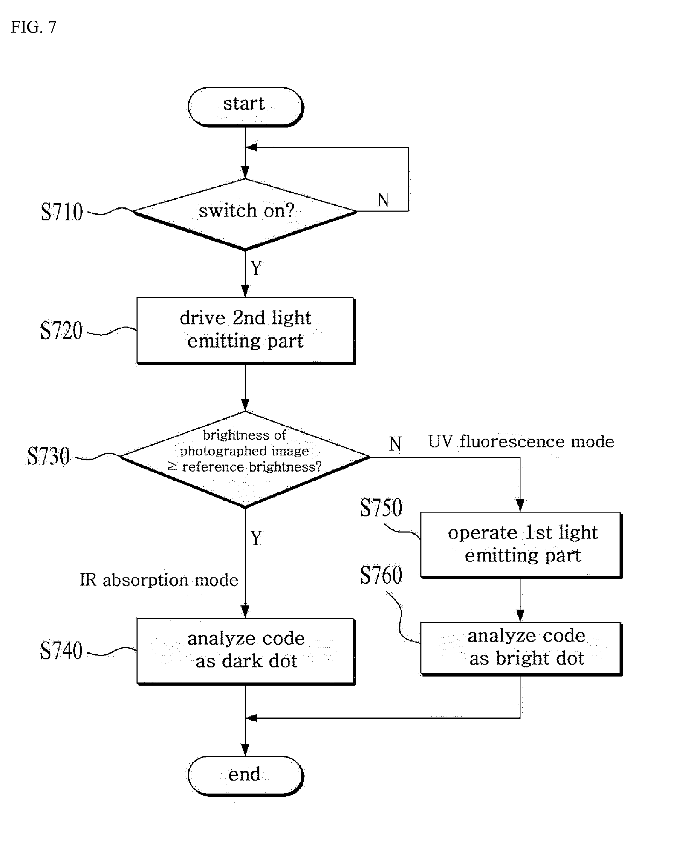

FIG. 6 is a block diagram showing the functions of the reader 100 of FIG. 4 according to another embodiment of the present invention, and FIG. 7 is a flowchart showing the operating principle of the reader 100 of FIG. 4 according to another embodiment of the present invention.

Hereinafter, the operating principle of the reader 100 according to another embodiment of the present invention will be described with reference to FIGS. 4 to 7. First, a controller 170 of the reader 100 determines the operating state of a switch 190 (step S710). If the operation of the switch 190 or the pressure applied to the switch 190 is detected, the controller 170 controls the second light emitting part 110-2 to irradiate the infrared light onto a target surface to be read (step S720).

If the target surface to be read is the film 200 having codes, which are recorded thereon by using the fluorescent material, the image acquired through the light receiving part 150 is significantly dark because the film layer 210 constituting the related film has the property to absorb the infrared light. If the target surface that has received the infrared light is the printed surface 400 having the codes which are recorded thereon by using the pigments absorbing the infrared light, a portion of the image, which is acquired through the light receiving part 150, corresponding to the dot codes is dark, and the remaining portion of the image is bright as shown in FIG. 5.

Accordingly, if the controller 170 determines if a brightness value of the image acquired through the light receiving part 150 is equal to or greater than a reference brightness value (step S730), so that the brightness value of the image is determined as being equal to or greater than the reference brightness value, the controller 170 determines the image as being acquired from the printed surface 400 having the dot codes recorded by using the pigments absorbing the infrared light, and analyzes the pattern information of the dot codes based on the dark dots of FIG. 5.

Meanwhile, if the brightness value of the image acquired through the light receiving part 150 is determines as being less than the reference brightness value, the controller 170 determines the present code surface to be read as the film 200 having codes which are recorded thereon by using the fluorescent material, stops the operation of the second light emitting part 110-2, which irradiates the infrared light, and controls the first light emitting part 110-1 to irradiate the ultraviolet light onto the code surface to be read. In this case, since only portions corresponding to the codes are bright in the image acquired through the light receiving part 150, the controller 170 analyzes the pattern information of the dot codes based on the bright dots of FIG. 2.

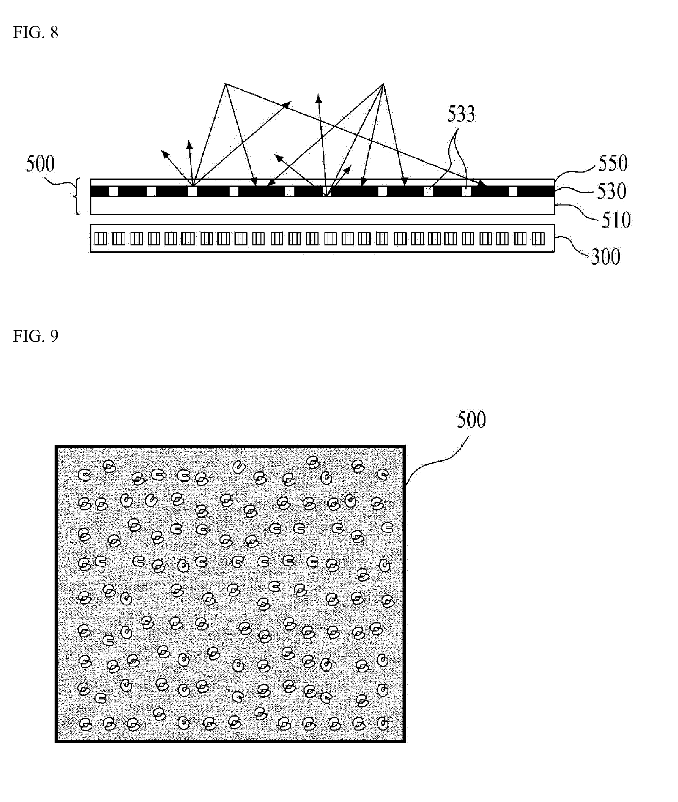

FIG. 8 is a view showing the structure of a film having codes recorded thereon according to still another embodiment of the present invention. Referring to FIG. 8, the film having the codes recorded thereon according to still another embodiment of the present invention includes a reflective layer 510, an information layer 530, and a protective layer 550.

The reflective layer 510 includes a material to reflect light irradiated onto the film from the light emitting part 110 of the reader 100. The information layer 530 is attached onto the reflective layer 510 and basically includes a material to absorb the light irradiated from the light emitting part 110 of the reader 100.

Meanwhile, a plurality of holes 533 are punched in the information layer 530 in order to express dot codes, and the protective layer 550 is formed on the information layer 530 having the holes 533 to protect the holes expressing the code information.

In other words, since the film of FIG. 8 having codes recorded thereon has codes expressed by using the holes 533, the film of FIG. 8 is called a punched film 550 according to the present invention.

According to the embodiment of the present invention, the holes 533 of the punched film 500 may be formed through a laser process, a pressing process using protrusions, and a custom mold having a plurality of gimlets engraved with code patterns .

Since the punched film 500 according to the present invention has the layered structure as shown in FIG. 8, when the infrared light is irradiated onto the information layer 530 from the light emitting part 110 of the reader 100, the infrared light is absorbed in a portion of the information layer 530 without the holes 533, and the infrared light irradiated to the holes 533 is not absorbed, but reflected from the reflective layer 510 provided under the holes 533 and exposed through the holes 533.

The infrared light reflected from the holes 533 is received in the light receiving part 150 of the reader 100, so that the reader 100 acquires the image shown in FIG. 9, and analyzes the pattern information of the dot codes based on the bright dots of FIG. 9.

Meanwhile, since the infrared light irradiated into the holes 533 of FIG. 8 is refracted and diffuse-reflected in the punched part, the beam irradiated from the light emitting part 110 may not be directly received in the light receiving part 150, or may not cause the light spot due to the mirror phenomenon.

In addition, according to the embodiment of the present invention, it is preferred that the protective layer 550 and the reflective layer 510 of the punched film 500 are made of a transparent material, so that the punched film 500 of FIG. 8 may be attached to the display surface of the display device 300 for the use thereof.

Meanwhile, in order to prevent the reader 100 from erroneously operating due to light irradiated from the display device 300 when the punched film 500 according to the present invention is attached on the surface of the display device 300 for the use thereof as shown in FIG. 8, the light irradiated from the light emitting part 110, which becomes the light received in the light receiving part 150 of the reader 100 after being reflected from the reflective layer 510, may preferably have the wavelength out of the visible wavelength band.

The present invention is not limited to the above-described embodiment, and may be variously modified by those skilled in the art to which the present invention pertains without departing from the spirit of the present invention and the modification falls within the scope of the present invention.

### [Industrial Applicability]

The present invention is applicable to an electronic industry field related to the reader and the code reading system.

## Claims

1. A reader (100) comprising:
a first light emitting part (110-1) irradiating a light having a first wavelength;
a second light emitting part (110-2) irradiating a light having a second wavelength;
a controller (170) controlling one of the first and second light emitting parts (110-1) and (110-2) to irradiate a light; and
a light receiving part (150) receiving a light from a product marked thereon with a code to which the light is irradiated from one of the first and second light emitting parts (110-1) and (110-2).

2. The reader of claim 1, wherein the controller (170) controls the second light emitting part (110-1) to irradiate the light having the second wavelength, and determines if a brightness of an image acquired from the product having the code marked thereon through the light receiving part (150) is equal to or greater than a predetermined brightness, if an operation of the reader (100) is started.

3. The reader of claim 2, wherein the controller (170) analyzes the code based on a dot representing a lower brightness if the brightness of the image is equal to or greater than the predetermined brightness.

4. The reader of claim 2, wherein the controller (170) stops an operation of the second light emitting part (110-2) and controls the first light emitting part (110-1) to irradiate the light having the first wavelength, if the brightness of the image is less than the predetermined brightness.

5. The reader of claim 2, wherein the controller (170) analyzes the code based on a dot representing a higher brightness in the image acquired from the product having the code marked thereon through the light receiving part (150).

6. The reader of claim 1, wherein the light having the first wavelength is an ultraviolet light, and the light having the second wavelength is an infrared light.

7. A film having a code recorded thereon, the film comprising:
a reflective layer (510) including a material reflecting a light irradiated onto the film from a light emitting part (110) of a reader (100); and
an information layer (530) formed on the reflective layer (510) and including a material absorbing the irradiated light, wherein the code is marked on the information layer (530) through a hole.

8. The film of claim 7, wherein the light irradiated into the hole from the light emitting part (110) of the reader (100) is reflected by the reflective layer (510) and received by a light receiving part (150) of the reader (100).

9. The film of claim 7, further comprising a protective layer (550) formed on the information layer (530) to protect the hole.

10. The film of claim 7, wherein the light irradiated into the hole is refracted and diffuse-reflected in the hole.

11. An electronic apparatus comprising a display device having a surface to which the film of claim 7 attached.

12. The electronic apparatus of claim 11, wherein the light irradiated from the light emitting part (110) of the reader (100) has a wavelength out of a visible wavelength band.
